(19) Europäisches Patentamt
European Patent Office
Office européen des brevets

(11) Veröffentlichungsnummer: **0 414 235 A1**

(12) # EUROPÄISCHE PATENTANMELDUNG

(21) Anmeldenummer: **90116118.2**

(51) Int. Cl.5: **B60P 1/64**

(22) Anmeldetag: **22.08.90**

(30) Priorität: **23.08.89 DE 3927867**

(43) Veröffentlichungstag der Anmeldung: **27.02.91 Patentblatt 91/09**

(84) Benannte Vertragsstaaten: **AT BE CH DE DK ES FR GB GR IT LI LU NL SE**

(71) Anmelder: **EDELHOFF POLYTECHNIK GMBH & CO.**
**Heckenkamp 31**
**D-5860 Iserlohn 5(DE)**

(72) Erfinder: **Kirchdorff, Johnannes**
**Langerfeldstrasse 55**
**D-5860 Iserlohn(DE)**
Erfinder: **Klossek, Hans**
**Erich-Nörrenberg-Strasse 1**
**D-5860 Iserlohn(DE)**

(74) Vertreter: **Gossel, Hans K., Dipl.-Ing. et al**
**Rechtsanwälte Lorenz E.,Gossel H.K.,Dipl.-Ing.,Philipps I.,Schäuble, P.B.,Dr.,Jackermeier,S.,Dr,Zinnecker,A.,Dipl.--Ing.,Laufhütte,D., Dr.-Ing.,Ingerle,R.E.,Dr.**
**Widenmayerstrasse 23 D-8000 München 22(DE)**

(54) **Lastkraftwagen zum Aufnehmen, Absetzen und Transport von mit diesem kuppelbaren Behältern, vorzugsweise Müllsammelfahrzeug mit Wechselbehältern.**

(57) Die Erfindung betrifft einen Lastwagen (1) zum Aufnehmen, Absetzen und Transport von mit diesem kuppelbaren Behältern (2), vorzugsweise ein Müllsammelfahrzeug mit Wechselbehältern, mit einem um eine im hinteren Bereich des Chassis des Lkw befindlichen Querachse (8) durch eine hydraulische Kolben-Zylinder-Einheit verschwenkbaren Schwenkrahmen (6) und mit einem auf diesem gelagerten und durch eine hydraulische Kolben-Zylinder-Einheit (12,13) hin- und herverschieblichen Schlitten (11), der durch einen Haken (16) an den Behälter (2) ankuppelbar ist und durch den sich der Behälter (2) auf dem Schwenkrahmen (6) verschieben läßt. Zur Lösung der Aufgabe, einen Lkw der eingangs angegebenen Art zu schaffen, mit dem sich ohne zusätzliche Transporteinrichtungen und/oder Hebezeuge Transportbehälter auf Anhäger absetzen und von diesen auch wieder übernehmen lassen, wird eine Einrichtung zur Übergabe eines Behälters an einen mit dem Lkw gekuppelten Behälter und zur Übernahme eines Behälters von dem Anhänger auf dem Lkw mit folgenden Merkmalen vorgesehen: Zunächst ist der Anhänger (4) mit einem in Längsrichtung auf diesem durch Antriebsmittel verfahrbaren Anhängerschlitten versehen, auf dem das auf diesem übergeschobene hintere Ende des Behälters (2) verriegelbar ist. Weiterhin ist der Schwenkrahmen (6) mit Antriebs-und Getriebemitteln versehen, durch die er um etwa 180° verschwenkbar ist.

EP 0 414 235 A1

Fig. 1

2
1
5
4
55
50
8
20,21
6
17
52
51
3
11
7

# LASTKRAFTWAGEN ZUM AUFNEHMEN, ABSETZEN UND TRANSPORT VON MIT DIESEM KUPPELBAREN BEHÄLTERN, VORZUGSWEISE MÜLLSAMMELFAHRZEUG MIT WECHSELBEHÄLTERN

Die Erfindung betrifft einen Lkw zum Aufnehmer, Absetzen und Transport von mit diesem kuppelbaren Behältern, vorzugsweise ein Müllsammelfahrzeug mit Wechselbehältern, mit einem um eine im hinteren Bereich des Chassis des Lkw befindliche Querachse durch eine hydraulische Kolben-Zylinder-Einheit verschwenkbaren Schwenkrahmen und mit einem auf diesem gelagerten und durch eine hydraulische Kolben-Zylinder-Einheit hin- und herverschieblichen Schlitten, der durch einen Haken an den Behälter ankuppelbar ist und durch den sich der Behälter auf dem Schwenkrahmen verschieben läßt.

Ein aus der älteren, aber nicht vorveröffentlichten Patentanmeldung P 38 40 246.7 bekannter Lkw dieser Art gestattet es, auf diesem befindliche Behälter ohne zusätzliche Hebezeuge auf den Boden derart abzusetzen, daß sie hochkant auf ihrer hinteren Seitenfläche stehen, und in dieser Weise abgesetzte Behälter ohne zusätzliche Transport- und Hebeeinrichtungen auch wieder aufzunehmen.

Es besteht nun zusätzlich auch das Bedürfnis, Behälter von der Transportfläche eines Lkw auf einen Anhänger abzusetzen, um diese in größeren Transporteinheiten zu ihren Bestimmungsorten zu verfahren, und umgekehrt auch Behälter von Anhängern auf die Ladefläche eines Lkw zu übernehmen.

Aufgabe der vorliegenden Erfindung ist es daher, einen Lkw der eingangs angegebenen Art zu schaffen, mit dem sich ohne zusätzliche Transporteinrichtungen und/oder Hebezeuge Transportbehälter auf Anhänger absetzen und von diesen auch wieder übernehmen lassen.

Erfindungsgemäß wird diese Aufgabe bei einem Lkw der gattungsgemäßen Art dadurch gelöst, daß eine Einrichtung zur Übergabe eines Behälters an einen mit dem Lkw gekuppelten Anhänger und zur Übernahme eines Behälters von dem Anhänger auf den Lkw mit folgenden Merkmalen vorgesehen ist:

a) Der Anhänger ist mit einem in Längsrichtung auf diesem durch Antriebsmittel verfahrbaren Anhängerschlitten versehen, auf dem das auf diesem übergeschobene hintere Ende des Behälters verriegelbar ist.

b) Der Schwenkrahmen ist mit Antriebs- und Getriebemitteln versehen, durch die er um etwa 180 Grad verschwenkbar ist.

Der erfindungsgemäße Lkw gestattet es, einen nit dessen Schwenkrahmen gekuppelten Behälter auf einen an diesen angehängten Anhänger dadurch abzusetzen, daß der Behälter über den Schlitten auf dem zunächst waagerecht auf dem Chassis ruhenden Schwenkrahmen so weit nach hinten verschoben wird, daß dessen hinteres Ende auf den Anhängerschlitten geschoben und mit diesem gekuppelt wird. Anschließend wird der Schwenkrahmen in bekannter Weise um etwa 90 Grad aufgerichtet, wobei die den Schlitten verfahrende hydraulische Kolben-Zylinder-Einheit auf Schwimmschaltung geschaltet ist, so daß Relativbewegungen zwischen dem Schlitten und dem schwenkbaren Rahmen ohne Verspannungen und/oder komplizierte Steuerungen möglich sind. Befindet sich der Schwenkrahmen in einer etwa senkrechten Stellung, wird der Anhängerschlitten in der Weise verfahren, daß er das hintere Ende des Behälters zum hinteren Ende des Anhängers zieht, wobei die Antriebe des Schwenkrahmens auf Schwimmstellung geschaltet werden, so daß ein Gegeneinanderarbeiten von hydraulischen Antrieben ausgeschlossen ist und ein behutsames Absetzer des Behälters auf den Anhänger sichergestellt ist. In der letzten Phase der Schwenkbewegung des Schwenkrahmens um einen Winkel von 180 Grad kann die Schwimmstellung der Antriebe des Schwenkrahmens entsprechend gedrosselt werden, um ein hartes Aufschlagen des Behälters auf dem Anhänger zu verhindern.

Nach dem Absetzen des Behälters auf dem Anhänger wird der Schwenkrahmen von dem Behälter dadurch entkuppelt, daß der Schlitten den Haken einfährt und dadurch aus der Öse des Behälters abzieht.

Das Übernehmen eines Behälters von einem an dem Lkw angekuppelten Anhänger erfolgt in entsprechend umgekehrter Weise. Zunächst wird der an dem Schlitten befindliche Haken mit der Behälteröse gekuppelt und anschließend wird dann der um 180 Grad ausgeschwenkte Schwenkrahmen senkrecht aufgerichtet, wobei dann die Antriebe des Anlängerschlittens auf Schwimmstellung geschaltet sind, um einfache verspannungsfreie Steuerungen zu ermöglichen. Sobald der Schwenkrahmen des Lkw senkrecht steht, erfolgt dessen Absenken in dessen waagerecht auf dem Grundrahmen des Chassis liegende Stellung in einer Weise, wie sie grundsätzlich in der älteren Patentanmeldung P 38 40 246.7 beschrieben ist.

Die Verschwenkbarkeit des Schwenkrahmens um 180 Grad aus seiner waagerecht auf dem Grundrahmen des Chassis des Lkw liegenden Stellung um 180 Grad kann grundsätzlich durch übliche hydraulische Antriebsmittel und Getriebemittel erfolgen. Als geeignete Antriebe kommen Schwenkantriebe, Kurbeltriebe und auch Zahnradtriebe in Betracht. Nach einer vorteilhaften Ausgestaltung ist vorgesehen, daß der Schwenkrahmen zum Aufrichten in seine etwa senkrechte Stellung mit einem schwenkbaren, gegen einen auf diesem befindlichen Anschlag abgestützten Hebel versehen ist, an <!em ein Ende der hydraulischen Kolben-Zylinder-Einheit angelenkt ist, dessen anderes Ende an dem Chassis angelenkt ist, und daß eine weitere hydraulische Kolben-Zylinder-Einheit mit einem Ende derart mit dem Schwenkrahmen und ihrem anderen Ende derart mit dem Hebel verbunden ist, daß diese den Hebel relativ zu dem Schwenkrahmen verschwenkt, so daß der Schwenkrahmen, der mit dem Chassis, der ersten hydraulischen Kolben-Zylinder-Einheit und dem Hebel ein Vier-Gelenk-System bildet, aus der etwa senkrechten Stellung in eine um etwa 180 Grad geschwenkte Stellung verschwenkbar ist.

Zweckmäßigerweise ist in dem Schlitten der die Behälteröse aufnehmende Haken schwenkbar gelagert und verriegelbar. Die verriegelte Stellung ist unter anderem dazu notwendig, um einen auf seiner hinteren Seitenfläche hochkant stehenden Behälter aufnehmen und absetzen zu können. Auch das Verschieben des Behälters in seiner auf dem Schwenkrahmen ruhenden waagerechten Stellung über den Schlitten bedingt einen mit diesem verriegelten Haken.

In weiterer Ausgestaltung der Erfindung ist vorgesehen, daß das den Haken tragende oder bildende Teil als zweiarmiger Hebel ausgebildet ist, dessen anderer Arm ein Schwerkraftpendel bildet, der den entriegelten Haken senkrecht ausrichtet. Diese Ausgestaltung stellt sicher, daß der Haken bei waagerecht auf dem Chassis liegenden Schwenkrahmen eine genau definierte senkrecht ausgerichtete Stellung einnimmt, in der er beispielsweise durch einen hydraulisch bewegten Bolzen mit dem diesen tragenden Schlitten verriegelt werden kann, so daß er seiner Funktion beim Absetzen und Aufnehmen von Behältern auf den Boden gerecht werden kann.

Nach einer zweiten Ausführungsform wird die der Erfindung zugrunde liegende Aufgabe bei einem Lastkraftwagen nach dem Oberbegriff des Patentanspruchs 1 dadurch gelöst, daß eine Einrichtung zur Übergabe eines Behälters an einen mit dem Lkw gekuppelten Anhänger, Eisenbahnwagen o.dgl. und zur Übernahme eines Behälters von dem Anhänger o.dgl. auf den Lkw mit folgenden Merkmalen vorgesehen ist:

a) Der Anhänger o.dgl. ist mit einem in Längsrichtung auf diesem durch Antriebsmittel verfahrbaren Schlitten versehen, auf dem das auf diesen übergeschobene hintere Ende des Behälters verriegelbar ist,

b) der Zylinder der den Schlitten auf dem Schwenkrahmen verschiebenden Druckmittel-Kolben-ZylinderEinheit ist nach Verschieben des Schlittens durch Einfahren der Kolbenstange derart in eine zweite gelenkige Halterung umsetzbar, daß er nach Ausfahren der Kolbenstange den Behälter in einer im wesentlichen horizontalen Lage weiter auf den Anhänger o.dgl. geschoben wird.

Während nach dem ersten Lösungsvorschlag das auf dem Schlitten verriegelte Ende des Behälters durch Verschwenken des Schwenkrahmens um 180 Grad hoch angehoben werden muß, gestattet die zweite erfindungsgemäße Lösung ein Überschieben des Behälters auf einen Anhänger, Transportwagen oder Eisenbahnwagen im wesentlichen in horizontaler Richtung. Bei der zweiten erfindungsgemäßen Lösung kann es jedoch erforderlich sein, den Schwenkrahmen soweit anzuheben, daß die Druckmittel-Kolben-Zylinder-Einheit mit eingefahrener Kolbenstange aus ihrer ersten Verriegelung heraus in ihre zweite Verriegelung behinderungsfrei verschwenkt werden kann.

Bei der zweiten erfindungsgemäßen Lösung wird der erforderliche große Überschubweg mit nur einem Zug- und Schub-Zylinder dadurch erreicht, daß der Zylinder in zwei verschiedene Stellungen umgesetzt und in diesen schwenkbar an dem Schwenkrahmen verriegelt wird. Die Hydraulikanschlüsse für die Druckmittel-Kolben-Zylinder-Einheit sind dabei so anzuordnen und zu führen, daß dem Zylinder der erforderliche Schwenkweg über etwa 180 Grad zu seiner Umsetzung gestattet wird.

Die zweite erfindungsgemäße Lösung kann bei einem Lastkraftwagen der erfindungsgemäßen Art zusätzlich zu der ersten angegebenen Lösung oder aber auch für sich allein vorgesehen sein.

Der den Behälter mit dem Schlitten verriegelnde Haken ist zweckmäßigerweise um eine horizontale Achse schwenkbar auf dem Schlitten gelagert und durch eine automatisch betätigbare Verriegelungseinrichtung auf dem Schlitten verriegelbar. Diese Verriegelungseinrichtung kann beispielsweise aus einem durch eine Druckmittel-Kolben-Zylinder-Einheit verschieblichen Verriegelungsbolzen bestehen.

In weiterer Ausgestaltung der Erfindung ist vorgesehen, daß die Kolbenstange an ihrem Ende mit einem Querstück versehen ist, das mittig gelenkig an dem Schlitten gelagert ist und an dessen beiden Enden kurbelartig die Enden von Kolbenstangen gelagert sind, deren Zylinder beidseits des Querstücks an dem Schlitten gelagert sind. Die Zylinder dienen als Halte- und Dämpfungszylinder für den Schubzylinder, so daß dieser nach Lösen aus seinem ersten Schwenklager nicht frei nach unten schlagen kann. Durch die kurbelartige Anlenkung der Kolbenstangen ist ferner gewährleistet, daß der Schubzylinder automatisch von seinem einen Schwenklager zu dem anderen und umgekehrt verschwenkt werden kann.

Zweckmäßigerweise ist der Haken zweiarmig ausgebildet und die Kolbenstange der den Schlitten verschiebenden Druckmittel-Kolben-Zylinder-Einheit ist an dem unteren, nicht mit einem Haken versehenen Arm angelenkt.

Ausführungsbeispiele der Erfindung werden nachstehend anhand der Zeichnung näher erläutert. In dieser zeigt

Fig.1 eine Seitenansicht eines Lkw mit einem an diesen angekuppelten Anhänger, bei dem unterschiedliche Stellungen des Behälters während dessen Übergabe von dem Lkw an den Anhänger strichpunktiert dargestellt sind,

Fig.2 eine Draufsicht auf die linke Hälfte des Anhängers mit abgehobenem Behälter,

Fig.3 eine Draufsicht auf den Schwenkrahmen des Lkw mit auf diesem längsverschieblich geführten Schlitten,

Fig.4 eine Seitenansicht des Schlittens mit in diesem schwenkbar gelagerten und verriegelbaren Haken,

Fig.5 eine Vorderansicht des Schlittens auf seiner Führung

Fig.6 einen Längsschnitt durch den Schwenkrahmen im Bereich seiner Anlenkung an den Grundrahmen des Chassis in seiner waagerecht auf dem Grundrahmen liegenden Position,

Fig.7 den Schwenkrahmen in seiner senkrechten, um 90 Grad geschwenkten Position,

Fig.8 den Schwenkrahmen in seiner um 180 Grad geschwenkten Stellung,

Fig.9 die den Schwenkrahmen um 180 Grad verschwenkenden Getriebe- und Antriebsmittel in schematischer Darstellung,

Fig.10 eine Seitenansicht des Schwenkrahmens einer zweiten Ausführungsform mit einem auf diesem verschieblich gehalterten Behälter, der das Überschieben des Behälters in einer im wesentlichen horizontalen Lage gestattet,

Fig.11 eine Draufsicht auf den Schwenkrahmen nach Fig.10 mit entferntem Behälter,

Fig.12 eine Seitenansicht des auf Führungsschienen des Schwenkrahmens verschieblich geführten Schlitten,

Fig.13 eine Draufsicht auf den Schlitten nach Fig.12 und

Fig.14 einen Querschnitt durch den Schlitten nach den Fig.12 und 13.

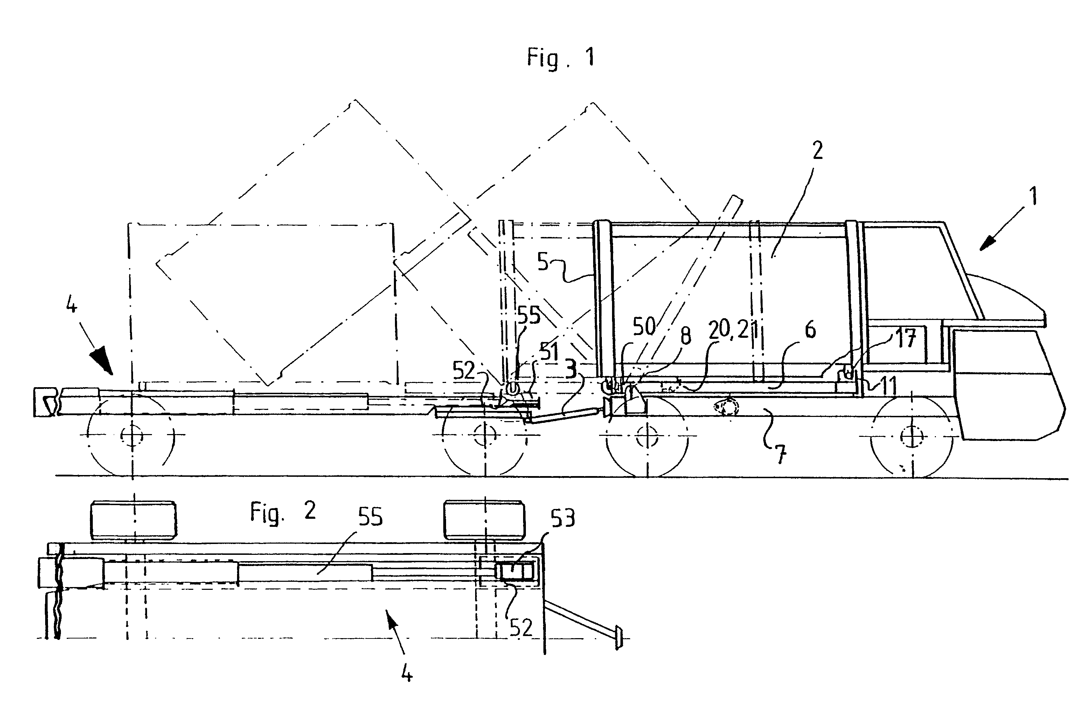

In Fig. 1 ist ein Müllsammelfahrzeug 1 dargestellt, das mit Wechselbehältern 2 versehen ist. An das Müllsammelfahrzeug 1 ist durch die Deichsel 3 der Anhänger 4 angekuppelt, auf den der Wechselbehälter 2 übergeschoben werden soll. Das Müllsammelfahrzeug 1 ist grundsätzlich bekannter Bauart und in der DE-OS 34 20 058 beschrieben worden, auf die zur näheren Darstellung Bezug genommen wird.

In der älteren, aber nicht vorveröffentlichten Patentanmeldung P 38 40 246.7 ist beschrieben worden, wie der quaderförmige Wechselbehälter 2 ohne fremde Hubzeuge oder Zusatzeinrichtungen von dem Sammelfahrzeug 1 in der Weise abgesetzt werden kann, daß er hochkant auf seiner hinteren Seitenfläche 5 steht und aus dieser Lage auch wieder aufgenommen werden kann. Das Absetzen und Aufnehmen von Wechselbehältern ist beispielsweise erforderlich, um gefüllte Wechselbehälter gegen leere austauschen und den Sammelbetrieb nach einem Wechsel wieder fortsetzen zu können.

Mit der vorliegenden Anmeldung wird Schutz für eine Weiter entwicklung des aus den DE-OS 34 20 058 und 38 40 246 bekannten Lkw in der Weise beansprucht, daß sich mit dem Lkw gekuppelte Wechselcontainer unmittelbar auch an einen Anhänger übergeben lassen.

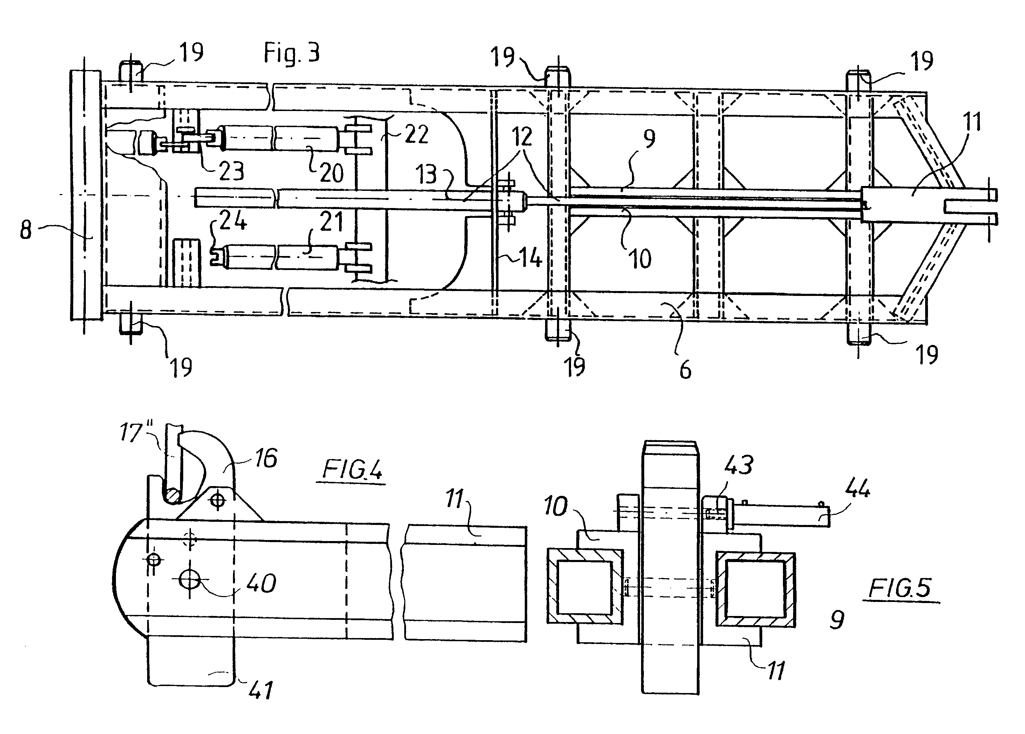

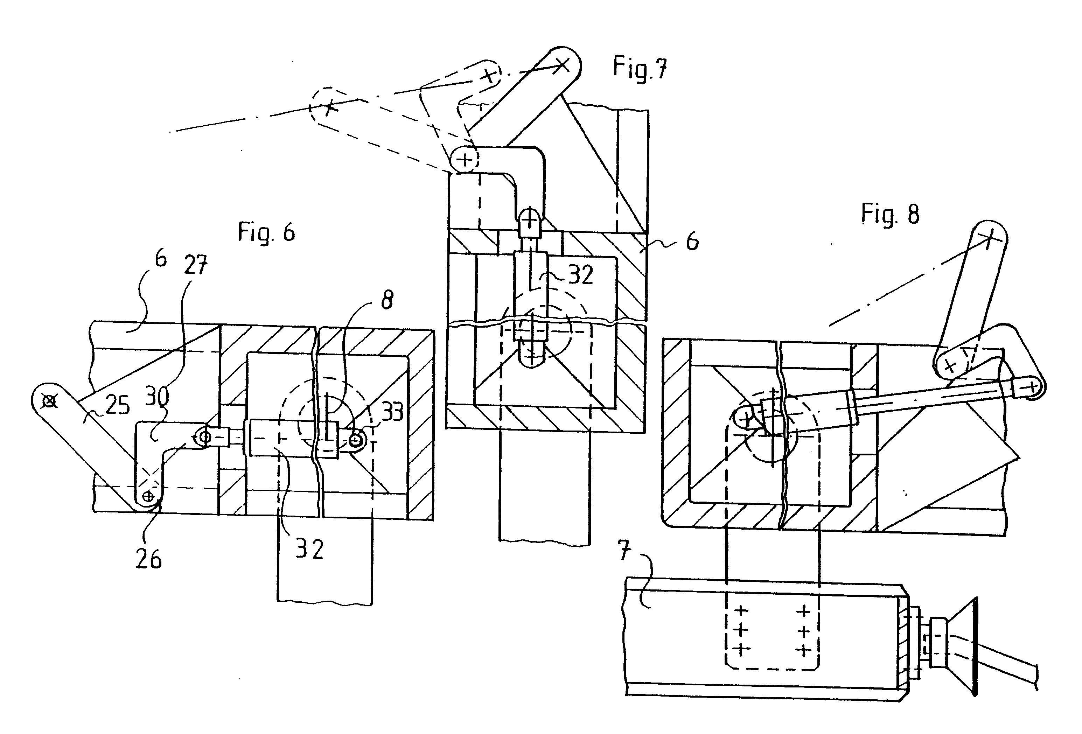

Das Müllsammelfahrzeug 1, bei dem es sich aber auch um einen anderen Lkw handeln könnte, ist mit einem Schwenkrahmen 6 versehen, der um eine im hinteren Bereich des Grundrahmens 7 des Chassis des Lkw befindliche Querachse 8 schwenkbar gelagert ist. Auf aus Fig.3 ersichtlichen Führungen 9,10 des Schwenkrahmens 6 ist ein Schlitten 11 geführt, der durch eine hydraulische Kolben-ZylinderEinheit 12 hin- und herverschieblich geführt ist, deren Zylinder 13 in der dargestellten Weise schwenkbar an einem Querjoch 14 des Schwenkrahmens 6 gelagert ist. Der Schlitten 11 trägt einen Haken 16, in den eine Öse 17 des Wechselbehälters 2 einhängbar ist. Der Wechselbehälter 2 ist mit seitlichen Kufen versehen, die sich auf Rollen 19 des Schwenkrahmens abstützen, die auf an den Längsholmen des Schwenkrahmens 6 befindlichen Achszapfen frei drehbar gelagert sind. Der Schwenkrahmen 6 läßt sich um die Achse 8 durch Hydraulikzylinder 20,21 aufrichten, deren Zylinder an einem Querträger 22 des Grundrahmens 7 des Chassis in der aus Fig.3 ersichtlichen Weise angelenkt sind. Die Kolbenstangen 23,24 der Zylinder 20,21 sind an den einen Enden von Hebeln 25 angelenkt, deren anderen Enden mit einer Schwenkwelle 26 drehfest verbunden sind, die in der aus Fig.6 ersichtlichen Weise im hinteren Bereich des Schwenkrahmens 6 im Abstand von der Schwenkachse 8 in dem Schwenkrahmen 6 frei drehbar gelagert ist. Die Hebel 25 stützen sich gegen Anschläge 27 des Schwenkrahmens 6 ab, so daß sich durch Ausfahren der Kolbenstangen 23,24 der Zylinder 20,21 der Schwenkrahmen 6 seine aus Fig.7 ersichtliche senkrechte Stellung ausfahren läßt. Die Hebel 25 sind derart gegen die Abstützflächen der Widerlager 27 abgestützt, daß sie bei auf dem Chassis waagerecht liegenden Schwenkrahmen die aus Fig.6 ersichtliche spitzwinkelige Stellung zu diesem einnehmen.

Mit der Schwenkwelle 26 sind weiterhin Winkelhebel 30 drehfest verbunden, deren Enden mit Kolbenstangen von Zylindern 32 gelenkig verbunden sind, die um die Achsen 33 schwenkbar im Endbereich des Kipprahmens 6 gelagert sind.

Um die Wechselbehälter 2 in der aus Fig.1 ersichtlichen Lage auf den Anhänger 4 übergeben zu können, ist es erforderlich, den Schwenkrahmen 6 um etwa 180 Grad zu verschwenken. Um diese Verschwenkung um 180 Grad zu erreichen, wird der Schwenkrahmen 6 zunächst durch Ausfahren der Kolbenstangen 23,24 der Zylinder 20,21 um etwa 90 Grad in die aus Fig.7 ersichtliche Stellung aufgerichtet. Anschließend werden die Kolbenstangen der Zylinder 32 ausgefahren, so daß der Schwenkrahmen 6 um weitere 90 Grad nach hinten verschwenkt werder kann.

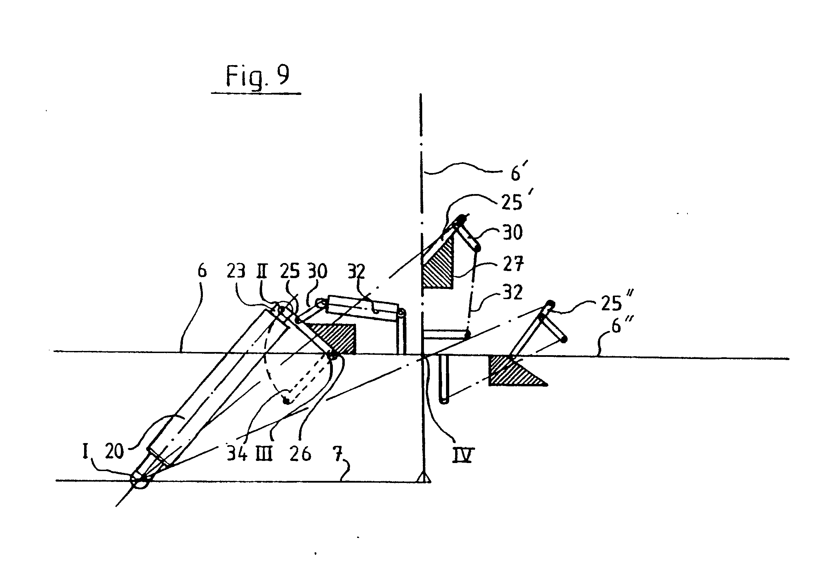

Die Art der Verschwenkung wird nachfolgend anhand der Prinzipskizze der Fig.9 erläutert.

Im linken Teil der Fig.9 ist der Schwenkrahmen 6 in seiner Lage dargestellt, in der er waagerecht auf dem Grundrahmen 7 des Chassis liegt. Der um die Achse 26 schwenkbare Hebel 25 ist an einer Schrägfläche des Widerlagers 27 abgestützt, der mit dem Schwenkrahmen 6 verbunden ist. Durch Ausfahren der Kolbenstange 23 des Zylinders 20 läßt sich der Schwenkrahmen 6 in seine senkrechte Stellung 6′ aufrichten, die aus Fig.7 ersichtlich ist. Bis in etwa diese Stellung ist der Zylinder 32 eingefahren, so daß über den Winkelhebel 30 der Hebel 25 in seiner Anlage an dem Widerlager 27 gehalten ist.

Etwa in der senkrechten Stellung 6′ des Schwenkrahmens wird die Kolbenstange des Zylinders 32 ausgefahren, so daß der Hebel 25 kurbelartig im Verhältnis zu dem Schwenkrahmen 6 gedreht wird und dadurch den Schwenkrahmen 6 in seine um 180 Grad verschwenkte Stellung 6″ verschwenkt.

Die Stellung des Hebel 25 nach Verschwenken des Schwenkrahmens um 180 Grad ist in dem linken und rechten Teil der Fig.9 in gestrichelter Form 25″ eingezeichnet. Aus dem linken Teil der Fig.9 ist ersichtlich, daß zum Verschwenken des Schwenkrahmens 6 aus der senkrechten Stellung 6′ in die um 180 Grad geschwenkte Stellung 6″ der Hebel 25 einen Winkel von etwa 90 Grad überstreicht, wobei der Schwenkradius 34 im linken Teil der Fig.9 eingezeichnet ist.

Wie aus Fig.9 ersichtlich ist, bildet der SchWenkrahmen 6 mit dem Grundrahmen 7 und mit der Kolben-Zylinder-Einheit 20,23 und dem Hebel 25 ein Vier-Gelenk-System mit den Gelenkpunkten I bis IV. Bis zu dem Aufrichten des Schwenkrahmens 6 in die senkrechte Stellung 6′ ist das Gelenk III, daß durch die Schwenkwelle 26 gebildet ist, dadurch blockiert, daß der Hebel 25 in Anlage an das Widerlager 27 gehalten ist. Bis zum Aufstellen in die senkrechte Lage bildet daher der Schwenkrahmen 6 mit dem Grundrahmen 7 und der hydraulischen Kolben-Zylinder-Einheit 20,23 ein Drei-Gelenk-System.

Bei dem Verschwenken aus der senkrechten Stellung in die um 180 Grad verschwenkte Stellung 6″ wird jedoch das Vier-Gelenk-System I bis IV in der aus Fig.9 ersichtlichen Weise dadurch verschwenkt, daß über die Kolben-Zylinder-Einheit 32 der Schwenkhebel 25 zu dem Schwenkrahmen 6 eine kurbelartige Bewegung ausführt. Der Anlenkpunkt des Zylinders der Kolben-Zylinder-Einheit 32 auf dem Schwenkrahmen ist dabei so zu wählen, daß dieser mit günstigem Drehmoment an den Hebeln 25,30 angreifen kann, so daß diese Hebel die beschriebene Kurbelbewegung mit günstigstem Drehmoment ausführen können.

Wie aus den Fig. 4 und 5 ersichtlich ist, ist in dem Schlitten 11 ein zweiarmiger Hebel um die Achse 40 schwenkbar gelagert, dessen oberes Teil den Haken 16 bildet und dessen unterer Arm 41 die Funktion eines Schwerkraftpendels hat, der den Haken immer in der oberen Stellung hält. Weiterhin ist der Schlitten 11 in der aus Fig.5 ersichtlichen Weise mit einem Verriegelungsbolzen 43 versehen, der durch die Kolbenstange des Hydraulikzylinders 44 gebildet ist und der den den Haken 16 tragenden Hebel in einer Stellung blockiert, in der er senkrecht zu dem Schlitten 11 steht.

In der aus Fig.1 ersichtlichen Stellung ist die Öse 17 des Containers 2 durch den Haken 16 verriegelt.

Um den Container 2 in der aus Fig.1 ersichtlichen Weise an den Anhänger 4 zu übergeben, wird zunächst der Schlitten 11 durch Einfahren der Kolbenstange des Zylinders 13 in die strichpunktierte Stellung nach hinten verschoben, so daß die hintere Stützrolle 50 des Containers 2 über die rampenförmige Schrägfläche 51 eines auf dem Anhänger 4 verfahrbaren Anhängerschlittens 52 läuft, bis sie in einer halbschalenförmigen Aufnahmemulde 53 des Anhängerschlittens 52 arretiert ist. Der Anhängerschlitten 52 ist in Längsführungen des Anhängers 4 durch eine hydraulische Kolben-Zylinder-Einheit 55 verfahrbar. Zum Verfahren könnte auch ein Kettentrieb oder ähnliches vorgesehen werden.

Um den Container 2 zu übergeben, wird der Schwenkrahmen 6 zunächst in seine etwa senkrechte Stellung aufgerichtet, wobei die Kolben-Zylinder-Einheit 12,13 auf Schwimmstellung geschaltet wird, um die Relativbewegungen des Schlittens 11 im Verhältnis zu dem Schwenkrahmen 6 auszugleichen. Anschließend wird der Anhängerschlitten 52 in der aus Fig.1 ersichtlichen Weise nach hinten gezogen, wobei der

Hydraulikantrieb (12,13) auf Schwimmschaltung geschaltet ist, so daß er über den Antrieb des Schlittens 52 mitgezogen wird.

Bei der restlichen Absetzbewegung wird der Schwenkrahmen zweckmäßigerweise gebremst, so daß der auf den Anhänger nach hinten geschobene Container 2 sanft auf diesen abgesetzt wird.

Das Absetzen des Containers 2 auf den Anhänger 4 wird, wie bereits beschrieben, dadurch eingeleitet, daß der zunächst noch auf dem Lkw in waagerechter Stellung ruhende Container 2 über den Schlitten 11 so weit nach hinten geschoben wird, daß die Stützrolle 50 in die Aufnahmemulde 53 des Anhängerschlittens 52 eingreift. Bei dieser Verschiebung ist der Haken 16 durch den Bolzen 43 der Kolben-Zylinder-Einheit 44 mit dem Schlitten 11 verriegelt. Nach dem Zurückschieben wird der Haken 16 entriegelt, so daß dieser frei um die Achse 40 pendeln kann. Diese Entriegelung ist möglich, weil der Behälter über die Stützrolle 50 in dem Anhängerschlitten 52 abgestützt ist, so daß der Behälter selbst auf den Haken kein Drehmoment ausübt, sondern sich auf diesem lediglich abstützt. Während der Absetzbewegung führt der Haken 16 eine Schwenkbewegung aus, die in Fig. 4 durch die Pfeile und die gestrichelte Darstellung des Hakens verdeutlicht ist.

Nach dem Absetzen des Containers 2 auf den Anhänger läßt sich der Haken 16 durch Einfahren des Schlittens 11 in einfacher Weise entriegeln.

Bei der Übernahme eines Containers 2 von einem angehängten Anhänger 4 wird zunächst der Haken 16 in die Öse 17 des auf dem Anhänger liegenden Containers eingefahren und dadurch die Verhakung bewirkt.

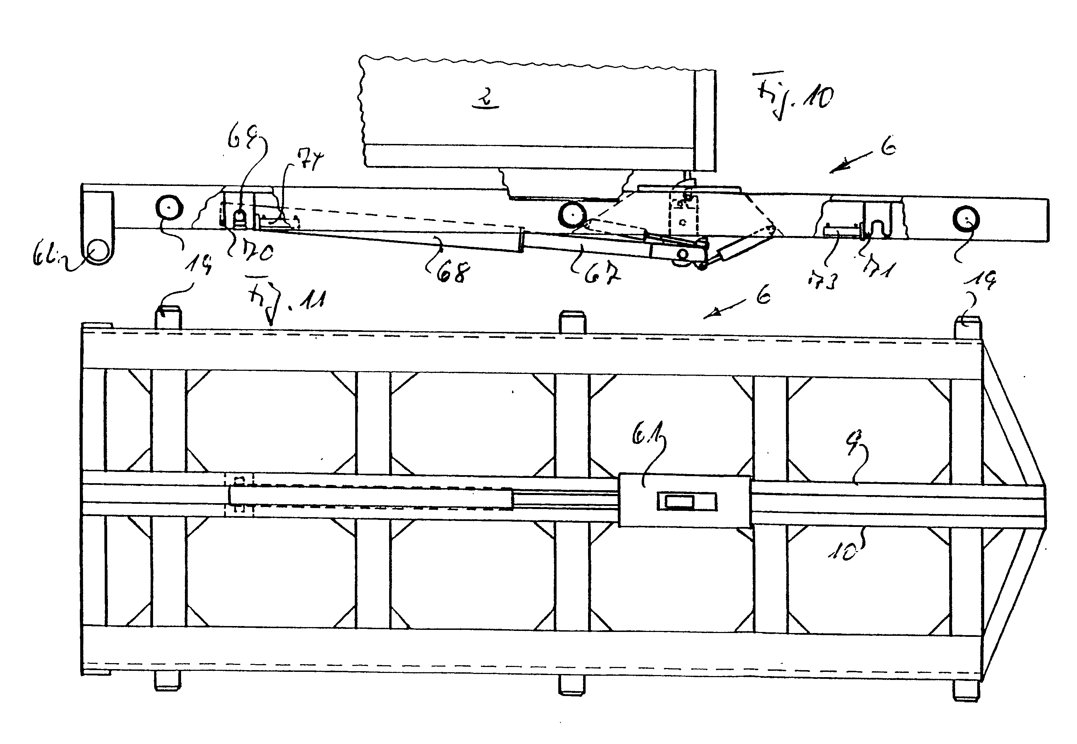

Das zweite Ausführungsbeispiel der Erfindung wird nun anhand der Fig.10 bis 13 näher beschrieben, wobei nur die Abweichungen erläutert werden und der Aufbau und die Ausgestaltung des Lkw und des Schwenkrahmen im übrigen dem ersten Ausführungsbeispiel entspricht. Soweit es sich um identische Bauteile handelt, werden daher die Bezugszeichen des ersten Ausführungsbeispiels beibehalten.

Der Schwenkrahmen 6 ist um die Schwenkachse 60 schwenkbar im hinteren Bereich des Chassis des Lkw gelagert und durch eine nicht dargestellte hydraulische Kolben-Zylinder-Einheit schwenkbar.

Auf den Führungen 9,10 des Schwenkrahmens 6 ist ein Schlitten 61 verschieblich geführt, der in seinem mittleren Bereich einen um eine horizontale Querachse 62 schwenkbar gelagerten zweiarmigen Hebel trägt, dessen oberer Arm als Haken 16 ausgebildet ist und dessen unterer Arm 63 nach unten hin den Schlitten 61 überragt. Der obere den Haken 16 tragende Arm ist mit einer Bohrung versehen, in die zur Verriegelung des Hakens 16 gegenüber dem Schlitten 1 ein von einem Hydraulikzylinder 64 betätigbarer Bolzen einfahrbar ist. Der Hydraulikzylinder 64 ist an eine schlittenfeste Konsole 65 angeflanscht.

An das nach unten ragende Ende des unteren Arms 63 des zweiarmigen Hebels ist um eine Schwenkachse 66 die Kolbenstange 67 einer hydraulischen Kolben-Zylinder-Einheit angelenkt, deren Zylinder 68 an seinem hinteren Ende mit seitlichen Lagerbolzen 69 versehen ist, die in gabelförmigen Lagerstücken 70,71 verriegelbar sind, die an den Führungsschienen 9,10 vorgesehen sind.

Dabei ist die Lage der gabelförmigen Lageaufnahmen 70,71 so gewählt, daß der Zylinder in diese einschwenken kann, wenn die an dem unteren Hebelarm 63 des Verriegelungshakens 16 angelenkte Kolbenstange 67 voll eingefahren ist. In diesem eingefahrenen Zustand können die die Lagerzapfen 69 in den gabelförmigen Lagerböcken 70,71 verriegelnden Schiebelaschen über ihre Hydraulikzylinder 73,74 gelöst werden, so daß die Lagerzapfen 69 des Zylinders 68 in den einen oder den anderen Lagerbock 70,71 verschwenkt werden können.

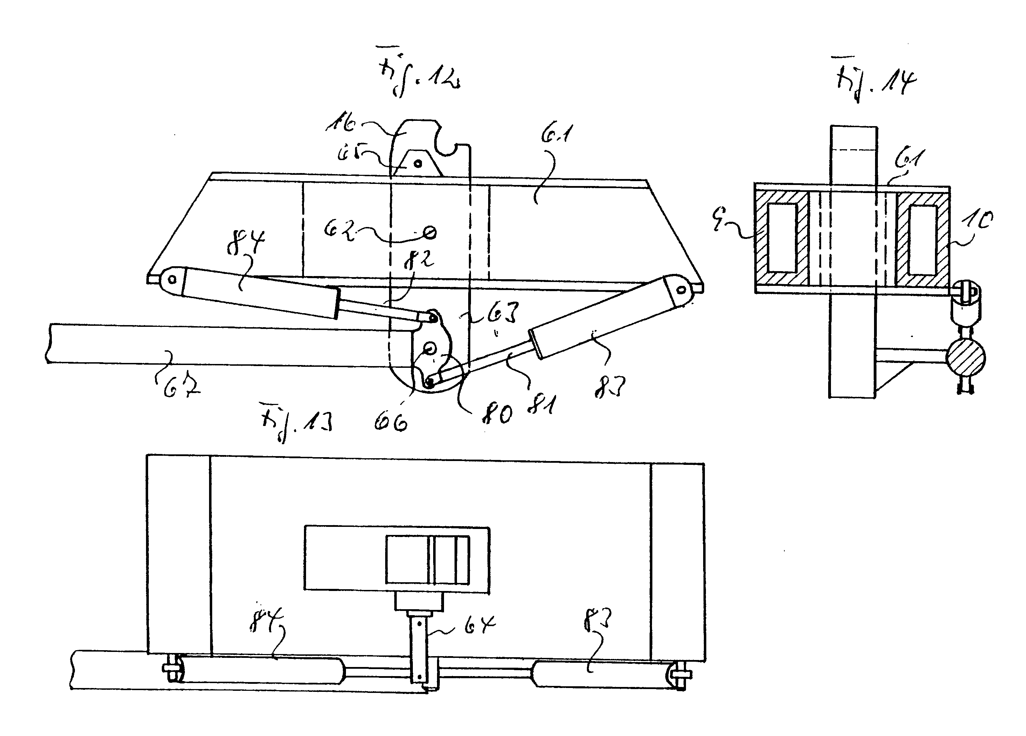

Das vordere Ende der Kolbenstange 67 des Zylinders 68 trägt ein Querstück 80, das mit einer mittleren Querbohrung zur Lagerung auf dem Lagerbolzen 66 versehen ist. An die Enden des Querstücks 68 sind die Kolbenstangen 81,82 von Hydraulikzylindern 83,84 angelenkt, die in der aus den Fig.12 und 13 ersichtlichen Weise in den Endbereichen des Schlittens 61 gelenkig gelagert sind. Die Kolbenstangen 81,82 sind kurbelartig an dem Querstück 80 angelenkt, so daß sie die Schwenkbewegung des aus seinen Lagerungen 71,72 gelösten Zylinders 68 zu dämpfen und diesen darüber hinaus zwischen seinen beiden Lagerstellen 70,71 zu schwenken vermögen.

Die Hydraulikanschlüsse der Zylinder 68,83 und 84 sind üblicher Art und daher nicht dargestellt.

Um einen auf dem Schwenkrahmen 6 gehalterten Behälter 2 auf einen mit dem Lkw gekuppelten Anhänger, einen Eisenbahnwagen o.dgl. überschieben zu können, wird zunächst der Schlitten 61, an den über den Haken 16 ein Ende des Behälters 2 angekuppelt ist, durch Einfahren der Kolbenstange 67 in den Zylinder 68, der im Lager 70 schwenkbar gelagert ist, zurückgeschoben, bis die Kolbenstange 67 voll eingefahren ist. Bei dieser Rückschubbewegung des Behälters stützt sich dieser über seine Kufen auf den seitlich an dem Schwenkrahmen 6 angeordneten Rollen ab.

Sobald die Kolbenstange 67 eingefahren ist und sich der Behälter noch mit einem wesentlichen Teil seiner Länge auf dem Schwenkrahmen 6 befindet, wird die Lagerverriegelung 64 gelöst, so daß Lagerzapfen 69 des Schub- und Druckzylinders 68 aus der Lagerung herausschwenken können. Durch Betätigung der Zylinder 83,84 wird nun der Zylinder 68 um 180 Grad geschwenkt, so daß dessen Lagerzapfen 69 in den Lagerbock 71 einschwenken und in diesem verriegelt werden. Durch erneutes Ausfahren der Kolbenstange 67 wird nun der Behälter 2 weiter auf den Anhänger o.dgl. geschoben. Da das vorauslaufende Ende des Behälters 2 auf dem Anhängerschlitten verriegelt wird, vermag dieser den Behälter um den Betrag weiter auf den Anhänger zu schieben, um den die Kolben-Zylinder-Einheit 67,68 das Überschieben nicht zu bewirken vermag. Sobald die Kolbenstange 67 beim Überschieben ausgefahren ist, wird die Verriegelung 64 für den Haken 16 gelöst, so daß dieser beim Zurückfahren des Schlittens 61 außer Eingriff mit der Behälteröse kommt.

Zum Übernehmen eines Behälters von einem Anhänger o.dgl. wird in umgekehrter Weise vorgegangen.

Bei dieser zweiten Ausführungsform ist grundsätzlich ein Verschwenken des Schwenkrahmens 6 nur um einen so großen Winkel erforderlich, daß der Zylinder 68 um die Lagerung 66 behinderungsfrei um 180 Grad zum Umsetzen zwischen dem Lager 70,71 verschwenkt werden kann.

## Ansprüche

1. Lastkratwagen zum Aufnehmen, Absetzen und Transport von mit diesem kuppelbaren Behältern, vorzugsweise ein Müllsammelfahrzeug mit Wechselbehältern,
mit einem um eine im hinteren Bereich des Chassis des Lkw befindliche Querachse durch eine hydraulische Kolben-Zylinder-Einheit verschwenkbaren Schwenkrahmen und
mit einem auf diesem gelagerte und durch eine hydraulische Kolben-Zylinder-Einheit hin- und herverschieblichen Schlitten, der durch einen Haken an den Behälter ankuppelbar ist und durch den sich der Behälter auf dem Schwenkrahmen verschieben läßt,
**dadurch gekennzeichnet,**
daß eine Einrichtung zur Übergabe eines Behälters an einen mit dem Lkw gekuppelten Anhänger und zur Übernahme eines Behälters von dem Anhänger auf den Lkw mit folgenden Merkmalen vorgesehen ist:

a) der Anhänger ist mit einem in Längsrichtung auf diesem durch Antriebsmittel verfahrbaren Anhängerschlitten versehen, auf dem das auf diesem übergeschobene hintere Ende des Behälters verriegelbar ist,

b) der Schwenkrahmen ist mit Antriebs- und Getriebemitteln versehen, durch die er um etwa 180 Grad verschwenkbar ist.

2. Lkw nach Anspruch 1, dadurch gekennzeichnet, daß der den Schlitten auf dem Schwenkrahmen verfahrende Hydrozylinder nach dem Ankuppeln des hinteren Endbereiches des teilweise auf den Anhänger übergeschobenen Behälters an den Anhängerschlitten bis zum Aufrichten des Schwenkrahmens um etwa 90 Grad auf Schwimmstellung geschaltet wird.

3. Lkw nach Anspruch 1 oder 2, dadurch gekennzeichnet, daß während des Verfahrens des hinteren Endes des Behälters auf dem Anhänger bis zu dessen vollständigem Absetzen auf diesem der Schwenkantrieb für den Schwenkrahmen auf Schwimmstellung geschaltet wird.

4. Lkw nach einem der Ansprüche 1 bis 3, dadurch gekennzeichnet, daß der Schwenkrahmen zum Aufrichten in seine etwa senkrechte Stellung mit einem schwenkbaren, gegen einen auf diesem befindlichen Anschlag algestützten Hebel versehen ist, an dem ein Ende der hydraulischen Kolben-Zylinder-Einheit angelenkt ist, dessen anderes Ende an dem Chassis angelenkt ist, und daß eine weitere hydraulische Kolben-Zylinder-Einheit mit einem Ende derart mit dem Schwenkrahmen und mit ihrem anderen Ende derart mit dem Hebel verbunden ist, daß diese den Hebel relativ zu dem Schwenkrahmen verschwenkt, so daß der Schwenkrahmen, der mit dem Chassis, der ersten hydraulischen Kolben-Zylinder-Einheit und dem Hebel ein Vier-Gelenk-System bildet, aus der etwa senkrechten Stellung in eine um etwa 180 Grad verschwenkten Stellung verschwenkbar ist.

5. Lkw nach einem der Ansprüche 1 bis 4, dadurch gekennzeichnet, daß in dem Schlitten der die Behälteröse aufnehmende Haken schwenkbar gelagert und verriegelbar ist.

6. Lkw nach einem der Ansprüche 1 bis 5, dadurch gekennzeichnet, daß das den Haken tragende oder bildende Teil als zweiarmiger Hebel ausgebildet ist, dessen anderer Arm ein Schwerkraftpendel bildet, der den entriegelten Haken senkrecht ausrichtet.

7. Lkw nach dem Oberbegriff des Patentanspruchs 1,
dadurch gekennzeichnet,
daß eine Einrichtung zur Übergabe eines Behälters an einen mit dem Lkw gekuppelten Anhänger o.dgl. und zur Übernahme eines Behälters von dem Anhänger o.dgl. auf den Lkw mit folgenden Merkmalen vorgesehen ist:

a) Der Anhänger ist mit einem in Längsrichtung auf diesem durch Antriebsmittel verfahrbaren Anhängerschlitten versehen, auf dem das auf diesen übergeschobene hintere Ende des Behälters (2) verriegelbar ist,

b) Der Zylinder (68) der den Schlitten (61) auf dem Schwenkrahmen (6) verschiebenden Druckmittel-Kolben-Zylinder-Einheit (67,68) ist nach Verschieben des Schlittens (61) durch Einfahren der Kolbenstange (67) derart in eine zweite gelenkige Halterung (71) umsetzbar, daß durch Ausfahren der Kolbenstange (67) der Behälter (2) in einer im wesentlichen horizontalen Lage weiter auf den Anhänger o.dgl. geschoben wird.

8. Lkw nach Anspruch 7, dadurch gekennzeichnet, daß der Haken (16) um eine horizontale Achse (62) schwenkbar auf dem Schlitten (61) gelagert und durch eine automatisch betätigbare Verriegelungseinrichtung (64) verriegelbar ist.

9. Lkw nach Anspruch 7 oder 8, dadurch gekennzeichnet, daß die Kolbenstange (67) an ihrem freien Ende mit einem Querstück (80) versehen ist, daß mittig gelenkig an dem Schlitten gelagert ist und an dessen beiden Enden kurbelartig die Enden von Kolbenstangen (81,82) gelagert sind, deren Zylinder (83,84) beidseits des Querstücks (80) an dem Schlitten (61) gelagert sind.

10. Lkw nach einem der Ansprüche 7 bis 9, dadurch gekennzeichnet, daß der Haken (16) zweiarmig ausgebildet und die Kolbenstange (67) der den Schlitten (61) verschiebenden Druckmittel-Kolben-Zylinder-Einheit an dem unteren, nicht mit dem Haken (16) versehenen Arm (63) angelenkt ist.

11. Lkw nach einem der Ansprüche 7 bis 10, dadurch gekennzeichnet, daß der Zylinder (68) der den Schlitten (61) verschiebenden Druckmittel-Kolben-Zylinder-Einheit (67,68) in seinen beiden an dem Schwenkrahmen (6) vorgesehenen Lagern (70,71) durch automatisch betätigbare Verriegelungseinrichtung (73,74) festlegbar ist.

Fig. 1
1
2
17
11
6
7
20,21
8
50
5
3
51
55
52
4
Fig. 2
53
52
55
4

Fig. 3
FIG.4
FIG.5
19
11
9
10
12
13
14
6
22
20
21
23
24
8
16
40
41
17"
44
43

Fig. 8
Fig. 7
Fig. 6
6
7
32
8
33
32
27
30
26
6
25

Fig. 9
6'
25'
30
27
32
25"
6"
IV
32
30
25
II
23
6
20
I
34
III
26
7

Europäisches Patentamt

# EUROPÄISCHER RECHERCHENBERICHT

Nummer der Anmeldung

EP 90 11 6118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | DE-A-3329677 (PAUL)<br>* Seite 11, Zeilen 4 - 35; Figuren 1-4 * | 1, 7 | B60P1/64 |
| A | EP-A-0163859 (EDELHOFF POLYTECHNIK) | | |
| P,A | EP-A-0347633 (EDELHOFF POLYTECHNIK) | | |
| | | | **RECHERCHIERTE SACHGEBIETE (Int. Cl.5 )** |
| | | | B60P |

Der vorliegende Recherchenbericht wurde für alle Patentansprüche erstellt

| Recherchenort | Abschlußdatum der Recherche | Prüfer |
|---|---|---|
| BERLIN | 27 NOVEMBER 1990 | LUDWIG H.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)